# EUROPEAN PATENT APPLICATION

(11) **EP 0 629 799 A1**
(43) Date of publication of application: **21.12.1994**
(21) Application number: 94108899.9
(22) Date of filing: 09.06.1994
(51) Int. Cl.: F16J 15/44

(54) **Pressure balanced compliant seal device having a flexible annular member**

(30) Priority: 15.06.1993 US 76773
(71) Applicant: EG&G SEALOL, INC., Cranston Rhode Island 02920 (US)
(72) Inventor: Gardner, James F., Exeter, Rhode Island 02822 (US)
(74) Representative: Grünecker, Kinkeldey, Stockmair & Schwanhäusser Anwaltssozietät

(57) **Abstract**

A compliant seal device (10) positionable within a housing cavity surrounding a shaft (12) for sealing a high pressure area from a low pressure area along the shaft. The compliant seal device comprises an annular member (14) having an inner peripheral surface (16), an outer peripheral surface (18) radially spaced from the inner peripheral surface, a front surface (20) facing the low pressure area, and a back surface (22) axially spaced from the front surface and facing the high pressure area. The annular member is circumferentially flexible and is at least partially pressure balanced across the inner and outer peripheral surfaces and across the front and back surfaces.

## Description

### BACKGROUND OF THE INVENTION

### Field of the Invention

The present invention relates to gas or liquid seals and, more specifically, to gas or liquid compliant seals for sealing high pressure areas from low pressure areas.

### Description of the Related Art

Many classes of machinery use clearance seals internally to seal against gas pressure. Often these seals are simple labyrinth seals which break down pressure by using a series of teeth or blades in close proximity to a rotating shaft. Such devices are well known and reliable, but allow high rates of gas leakage. Typically, clearances between the blade tips of a labyrinth seal and the shaft are as high as 0.001 - 0.002 inch per inch of shaft diameter, depending upon the class of machine being sealed. As an example, for a 6.00 inch diameter shaft, the radial clearance between the shaft and blade tip could be 0.006 - 0.012 inch on a typical centrifugal gas compressor.

Some of the classes of rotating machinery which use labyrinth seals include centrifugal gas compressors, gas turbines, steam turbines, gas expanders and turbofan engines. Seal sizes range from less than one inch up to several feet diameter for large machines. Pressures on centrifugal gas compressor labyrinth seals range from less than one hundred PSIG to as high as 1500 PSIG at the balance diameter location. Temperatures on these machines go up to 500°F. Surface speeds go as high as 500 fps on typical gas compressors.

Much work has been done to reduce the leakage of labyrinth seals. Typically, the approach of past efforts has been directed toward improved blade geometry (e.g., backward angled blade designs), step seals, or interlocking blade designs to reduce losses. Abradable labyrinth seal designs have also been developed and are employed, particularly, on jet engines. The blades of such abradable seals are initially installed with a line-to-line clearance, and then wear in to their own clearance as the shaft rotates. However, after the rotor has gone through an operating history of radial vibration combined with axial excursions, a crescent-shaped clearance is often cut into the abradable seal, and leakage can increase dramatically. In spite of many improved designs, therefore, leakage losses for labyrinth seals continue to represent a considerable energy loss in rotating machinery.

Another significant problem with high pressure labyrinth seals is the occurrence of rotordynamic effects. Because high pressure gas is quite dense, a labyrinth seal tends to act as a bearing with high gas pressures, but also tends to destabilize the rotor due to a lack of concentricity with the actual machine bearings. Significant effort has been recently made to decrease these rotordynamic excitation effects. The product of these efforts includes swirl breaks in front of a labyrinth, reverse swirl inducers, and the injection of tangentially non-moving gas into the first stagnant region of the labyrinth. Other work has concentrated on optimizing seal geometry and creating a rough surface within the labyrinth seal to retard circumferential gas velocity buildup. Also, honeycomb design labyrinth seals have been developed to reduce rotordynamic excitation effects. Despite these efforts, however, further reduction of rotordynamlc effects is still desirable.

Usually, improved abradable seals are used on jet engine seal locations. Although these seals are installed with relatively tight clearances, after the rotor has gone through an operating history of radial vibration combined with axial excursions, the blades cut out a crescent shaped clearance, and leakage can dramatically increase. Jet engine labyrinth seals are mostly used for gas path sealing where pressures for 20 up to several hundred PSI are common. Temperatures range as high as 1600°F, and surface speeds currently go as high as 800 fps, with speeds of 1200 fps being planned for new engines.

Floating bushing seals are another device often used to seal very high pressure, such as on pumps and oil seals on turbocompressors. Clearances are usually maintained by shrink fitting a seal ring material, such as carbon graphite, into a metal ring having the same thermal expansion coefficient as the shaft material. There are limits to clearance reduction, however, because of differential thermal transients and centrifugal growth of the shaft.

Usually high pressure cryogenic applications are presently handled by labyrinth seals or floating brush seals, but very high leakage is a limitation. In particular, with LH₂, which is at - 423°F, a ring seal will cool faster than the solid shaft thereby causing the ring to lock down on the shaft and fracture. For a 8.50 inches diameter shaft, for example, one could expect a ring diameter reduction of 0.036 inch when it is exposed to LH₂. If sufficient clearance is built into the seal to prevent lockdown of the seal ring, leakage is prohibitive. LH₂ is particularly hard to seal, since its viscosity his only about 1/100 the viscosity of water and its density is only 4.4 pounds per cubic foot. Thus, the normal actions of a bushing seal, i.e., viscous and inertial sealing terms, are very low.

### SUMMARY OF THE INVENTION

Features and advantages of the invention will be set forth in part in the description which follows, and in part will be obvious from the description, or may be learned by practice of the invention. The objects and other advantages of the invention may be realized and attained by the apparatuses particularly pointed out in the written description, claims, and appended drawings.

To achieve these and other advantages, and in accordance with the purposes of the invention as embodied and broadly described herein, a compliant seal device positionable within a housing cavity surrounding a shaft is provided for sealing a high pressure area from a low pressure area along the shaft. The compliant seal device comprises an annular member having an inner peripheral surface, an outer peripheral surface radially spaced from the inner peripheral surface, a front surface facing the low pressure area, and a back surface axially spaced from the front surface and facing the high pressure area. The annular member is circumferentially flexible. The compliant seal device further comprises means for maintaining at least a partial pressure balance across the inner and outer peripheral surfaces of the annular member and means for maintaining at least a partial pressure balance across the front and back surfaces of the annular member.

In one aspect of the invention, the annular member includes a plurality of slots formed therethrough, wherein the plurality of slots are arranged to provide the annular member with the circumferential flexibility.

In another aspect of the invention, the compliant seal device further comprises a hollow annular container positionable within the housing cavity, wherein the hollow annular container has an opening facing radially inward for containing the annular member therein.

It is to be understood that both the foregoing general description and the following detailed description of the invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of the specification, illustrate several embodiments of the invention and together with the description serve to explain the principles of the invention. In the drawings:
FIG. 1 is a perspective view of a compliant seal device in accordance with a first embodiment of the invention;
FIG. 2(A) is a side view of half of the compliant seal device of FIG. 1;
FIG. 2(B) is an end view of a portion of the annular member of the compliant seal device of FIG. 1;
FIG. 3(A) is a pressure distribution diagram of the compliant seal device of FIG. 1 under non-rotating conditions of the shaft;
FIG. 3(B) is a pressure distribution diagram of the compliant seal device of FIG. 1 under rotating conditions of the shaft;
FIG. 4(A) is a side view of half of a compliant seal device in accordance with a second embodiment of the invention;
FIG. 4(B) is an end view of a portion of the annular member of the compliant seal device of FIG. 4(A);
FIG. 4(C) is a pressure distribution diagram of the compliant seal device of FIG. 4(A) under non-rotating conditions of the shaft;
FIG. 5(A) is a perspective view of a compliant seal device in accordance with a third embodiment of the invention;
FIG. 5(B) is a side view of half of the compliant seal device of FIG. 5(A);
FIG. 6(A) is a pressure distribution diagram of the compliant seal device of FIG. 5(A) under non-rotating conditions of the shaft; and
FIG. 6(B) is a pressure distribution diagram of the compliant seal device of FIG. 5(A) under rotating conditions of the shaft.

### DETAILED DESCRIPTION OF THE INVENTION

Reference will now be made in detail to the presently preferred embodiments of the invention, as illustrated in the accompanying drawings, in which like reference characters designate like or corresponding parts throughout the several drawings.

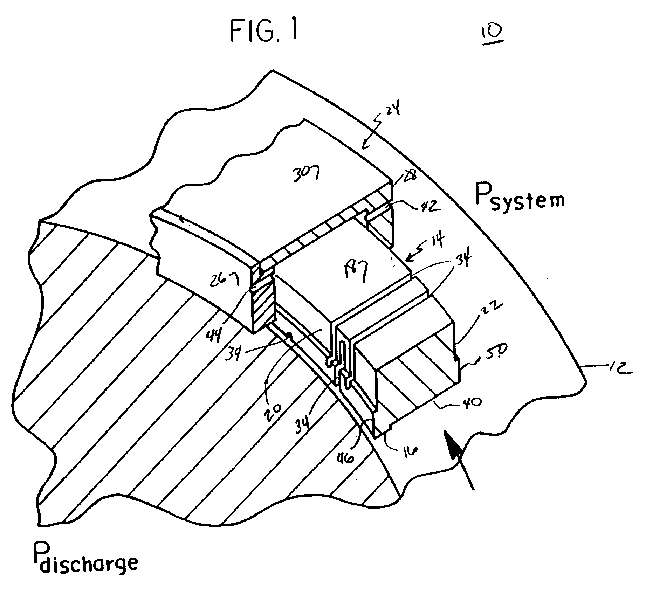

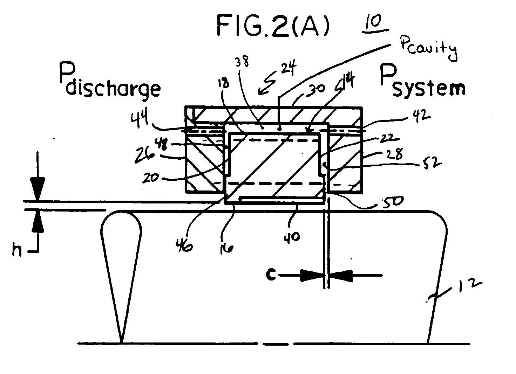

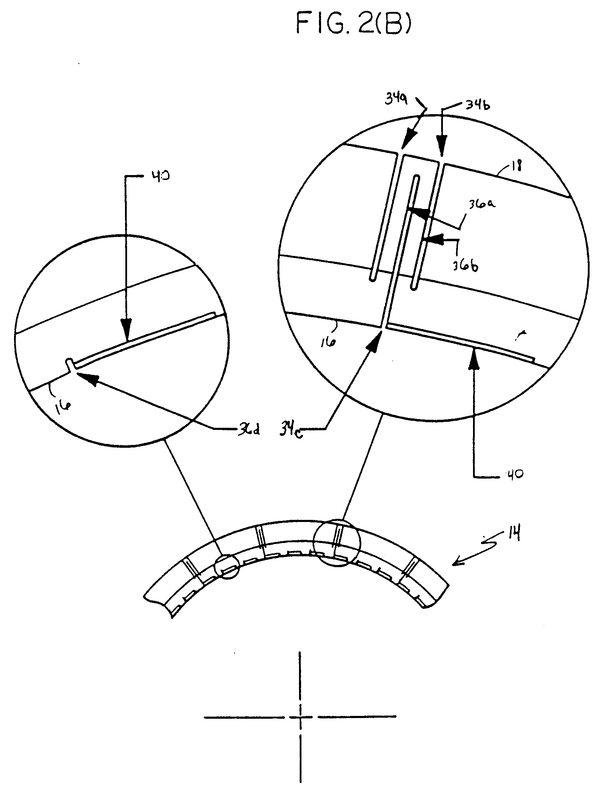

A first embodiment of the invention will now be described with reference to FIGS. 1, 2(A)-2(B), and 3(A)-3(B). As shown in FIGS. 1 and 2(A), a compliant seal device 10 positionable within a housing cavity (not shown) surrounding a shaft 12 is provided for inhibiting the flow off a gas (or liquid) in a stream along the shaft 12. It is contemplated that the housing cavity is formed in a machine housing (not shown) and that the gas (or liquid) is sealed, for example, within the machine housing. While the sealed gas (or liquid) has a system pressure of P_{system}, the area outside of the machine housing toward which the sealed gas (or liquid) will tend to flow has a discharge pressure P_{discharge}, which is less than the system pressure P_{system}.

The compliant seal device 10 comprises an annular member 14 having an inner peripheral surface 16, an outer peripheral surface 18 radially spaced from the inner peripheral surface 16, a front surface 20 facing the discharge pressure P_{discharge}, and a back surface 22 axially spaced from the front surface 20 and facing the system pressure P_{system}. Preferably, the annular member 14 comprises a material having a high yield strength at high temperatures. For example, the annular member can comprise a nickel based alloy such as Inconel® manufactured by Inco Alloys International. It is contemplated, however, that the composition of the annular member 14 can be varied depending on the particular application with which the compliant seal device 10 is to be used.

Preferably, the compliant seal device 10 further comprises a hollow annular container 24 having a front wall 26, a back wall 28, and an outer peripheral wall 30. It is contemplated that the container 24 is removeably positionable within the housing cavity and has an opening facing radially inward to form a cavity corresponding in shape to the housing cavity. Preferably, the container 24 comprises the same material as the annular member 14 and the annular member 14 is preferably positioned within the container 24 such that the container 24 and the annular member 14 form a single piece package as shown in FIGS. 1 and 2(A). Alternatively, the annular member 14 can be positioned directly within the housing cavity without the container 24.

To inhibit the annular member 14 from rotating within the container 24 (or the machine housing), one or more anti-rotational pins (not shown) can be provided in engagement with the annular member 14. Preferably, the pins comprise the same material as the annular member 14 and extend from the container 24 (or the machine housing) along an axial direction of the annular member 14.

It is contemplated that the compliant seal device 10 is of the non-contacting type such that the it actually rides above the shaft 12 upon a thin film of gas (or liquid) creating a small clearance h between the inner peripheral surface 16 of the annular member 14 and the shaft 12. It is contemplated that the clearance h is typically within the range of 0.0002 - 0.0015 inch, depending on the size of the compliant seal device 10. It should be appreciated that clearances of this magnitude are much less than those found in conventional fixed diameter bushing seals and, therefore, leakage for the compliant seal device 10 is substantially less.

As shown in FIG. 1, the annular member 14 includes a plurality of slots 34 formed therethrough. The slots 34 are arranged to provide the annular member 14 with circumferential flexibility. For example, as shown in FIG. 2(B), the annular member 14 includes a first set of slots 34a and a second set of slots 34b extending radially inward from the outer peripheral surface 18 of the annular member 14. The annular member 14 further includes a third set of slots 34c extending radially outward from the inner peripheral surface 16 of the annular member 14 such that each slot of the third set of slots 34c is positioned between respective slots of the first and second sets of slots 34a and 34b to form respective first and second flexible beam sections 36a and 36b. It is contemplated that with this configuration, circumferential stresses resulting from radial expansion of the annular member 14 are taken by the flexible beam members 36a and 36b. Analytically, the flexible beam members 36a and 36b can be initially modeled as cantilever beams with partially built in ends. By varying the length and the thickness of the flexible beam members 36a and 36b, it is possible to vary the circumferential flexibility of the annular member 14. It is contemplated that the annular member 14 can be designed to have a desired circumferential flexibility by, for example, finite element analysis or other technique known to those skilled in the art. It is further contemplated that the annular member 14 can have other configurations, e.g., a different number and arrangement of slots, such that the annular member 14 is circumferentially flexible. For example, the slots 34a-34c can be machined at an angle to increase the effective length of the beam sections 36a and 36b and to effect the wedge angle between the inner peripheral surface 16 of the annular member 14 and the shaft 12. It should be appreciated that by providing the annular member 14 with the circumferential flexibility, the compliant seal device 10 can expand (or contract) in response to, for example, thermal and/or centrifugal expansion (or contraction) of the shaft 12. In this manner, the compliant seal device 10 can operate with much smaller clearances h than a conventional fixed bore seal device.

The complaint seal device 10 further comprises means for maintaining at least a partial pressure balance across the inner and outer peripheral surfaces 16 and 18 of the annular member 14 and means for maintaining at least a partial pressure balance across the front and back surfaces 20 and 22 of the annular member 14.

As shown in FIG. 2(A), by way of example and not limitation, the means for maintaining at least a partial pressure balance across the inner and outer peripheral surfaces 16 and 18 of the annular member 14 is represented by a space 38 defined by the outer peripheral surface 18 of the annular member 14 and the outer peripheral wall 30 of the container 24 (or the housing cavity) and a recess 40 formed in the inner peripheral surface 16 of the annular member 14. The space 38 communicates with the system pressure P_{system} or the discharge pressure P_{discharge} via, for example, one or more through ports to increase or decrease the pressure P_{cavity} in the space 38. For instance, to raise the pressure P_{cavity}, a plurality of through ports 42 can be provided in communication with the space 38 and the system pressure P_{system}. Likewise, to lower the pressure P_{cavity}, a plurality of through ports 44 can be provided in communication with the space 38 and the discharge pressure P_{discharge}. Typically, only one set of the through ports 42 and 44 is provided. It should be appreciated that the flow through the through ports 42 and 44 is very small as compared with a standard labyrinth seal design.

Preferably, the recess 40 includes any one of an open Rayleigh pad, a closed Rayleigh pad, a tapered Rayleigh pad, a shrouded Rayleigh pad a radial groove, and a spiral groove. Alternative designs for the recess can also be utilized as is known in the art. The recess 40 can be chemically milled, ion etched, or made by other means known in the art. The purpose of the recess 40 is to obtain non-contacting operation of the annular member 14 with respect to the shaft 12 during both rotating and non-rotating conditions of the shaft 12. In this regard, the recess 40 is in communication with the system pressure P_{system}. For example, as shown in FIG. 2(A), the recess 40 is open at the back surface 22 of the annular member 14 so as to allow the system pressure P_{system} to enter therein. In addition, shallow gas feed slots 36d can be machined into the inner peripheral surface 16 of the annular member 14 to increase circumferential flow caused by rotation of the shaft 12 into the recess 40. Preferably, the recess 40 is relatively shallow, e.g., about 2-3 times the design operating clearance h, and its dimensions are such that it, in conjunction with the space 38, provides at least a partial hydrostatic force balance across the inner and outer peripheral surfaces 16 and 18 of the annular member 14.

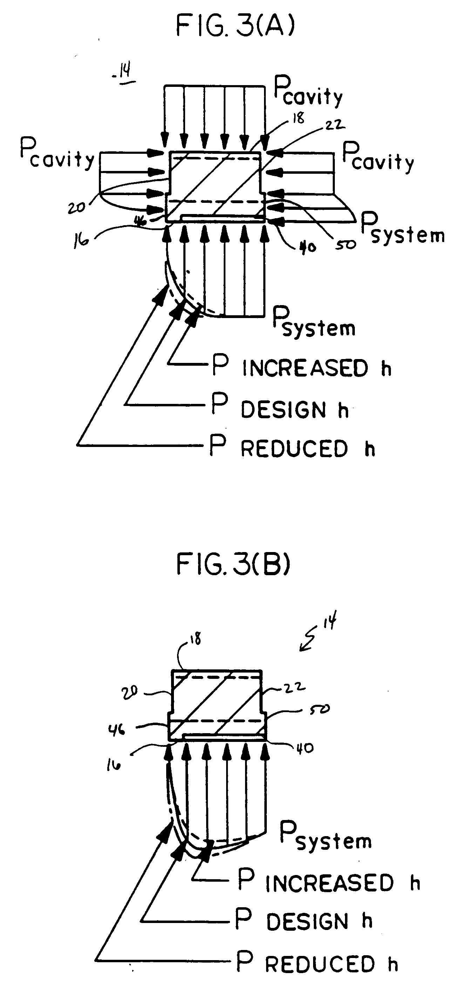

FIGS. 3(A) and 3(B) show a typical pressure distributions around the annular member 14 during non-rotating and rotating conditions, respectively, of the shaft 12. As shown in FIG. 3(A), the pressure between along the inner peripheral surface 16 of the annular member 14 decays parabolically from the system pressure P_{system} to the discharge pressure P_{discharge} as the inner peripheral surface 16 is traversed from the back surface 22 to the front surface 20 of the annular member 14. Generally, this pressure profile can be characterized in terms of a "K" value which is the ratio of the total force of the parabolic pressure distribution to a full rectangular pressure distribution. It is contemplated that for sealing gases, the "K" value should typically be in the range of about 0.82 - 0.94, depending on the depth of the recess 40, the operating clearance h, and the like. It is also contemplated that for proper design of the compliant seal device 10, the through ports 42 or 44 should be sized so as to maintain the pressure P_{cavity} at about "K" times the system pressure P_{system} to thereby achieve a nominal pressure balance across the inner and outer peripheral surfaces 16 and 18 of the annular member 14. It should be appreciated that rapid response pressure balancing with such a configuration cane be achieved by virtue of changes in the pressure profile along the inner peripheral surface 16 as a function of the operating clearance h. In particular, as shown in FIG. 3(A), the shape of the pressure drop across the inner peripheral surface 16 of the annular member 14 depends on the operating clearance h, such that if the clearance h decreases, the hydraulic force at the inner peripheral surface 16 of the annular member 14 increases and vice-versa. In addition to creating at least a partial hydrostatic pressure balance, the recess 40 can be designed to create a hydrodynamic pressure balance. For example, as shown in FIG. 3(B), during rotation of the shaft 12, the pressure along the inner peripheral surface 16 of the annular member 14 can he "pumped up" to values in excess of the system pressure P_{system}, especially for reduced operating clearances. This hydrodynamic pumping action of the recess 40 gives a further increase in film stiffness as the operating clearance h decreases.

As also shown in FIG. 2(A), by way of example and not limitation, the means for maintaining at least a partial pressure balance across the front and back surfaces 20 and 22 of the annular member 14 is represented by a first dam member 46 positioned between the front surface 20 of the annular member 14 and the front wall 26 of the container 24 (or the housing cavity) toe define a space 48 between the front surface 20 of the annular member 14 ad the front wall 26 of the container 24 (or the housing cavity) and a second dam member 50 positioned between the back surface 22 of the annular member 14 and the back wall 28 of the container 24 (or the housing cavity) to define a space 52 between the back surface 22 of the annular member 14 and the back wall 28 of the container 28 (or the housing cavity). While the first dam member 46, the second dam member 50, and the annular member 14 can be formed together as a single piece element as shown in FIG. 2(A), the first dam member 46 and the second dam member 50 can, alternatively, be formed as a single piece element with the front and back walls 26 and 28, respectively, of the container 24 (or the housing cavity).

Preferably, the spaces 48 and 52 communicate with the cavity pressure P_{cavity} in the space 38. This communication is provided to increase or decrease the pressure in the spaces 48 and 52 such that there is at least a partial hydrostatio force balance across the front and back surfaces 20 and 22 of the annular member 14. For example, as shown in FIG. 3(A), the full pressure P_{cavity} exists along the back surface 22 of the annular member 14 as the surface 22 is traversed from the outer peripheral surface 18 to the second dam member 50. This pressure parabolically increases to the system pressure P_{system} across the second dam member 50 and remains at the system pressure P_{system} down to the shaft 12. Along the front surface 20 of the annular member 14, the pressure P_{cavity} exists as the front surface 20 is traversed from the outer peripheral surface 18 to the first dam member 46. This pressure decays, however, to the discharge pressure P_{discharge} across the first dam member 46. It should be appreciated that with this configuration, the force at the back surface 22 of the annular member 14 is greater than the force at the front surface 20 of the annular member 14 resulting in a clearance c between the second dam member 50 and the back wall 28 of the container 24 (or the housing cavity) and also resulting in a mechanical contact load between the first dam member 26 and the front wall 26 of the container 24 (or the housing cavity). Thus, only a partial pressure balance is achieved across the front and back surfaces 20 and 22 of the annular member 14.

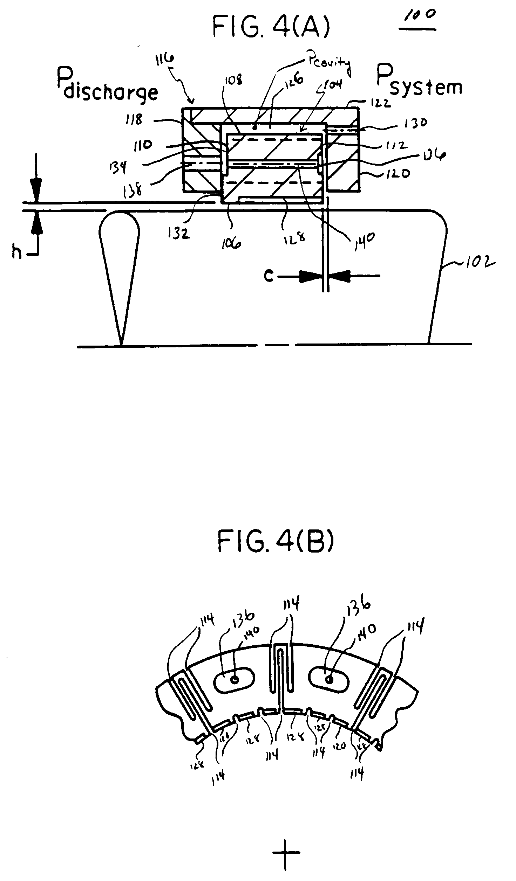

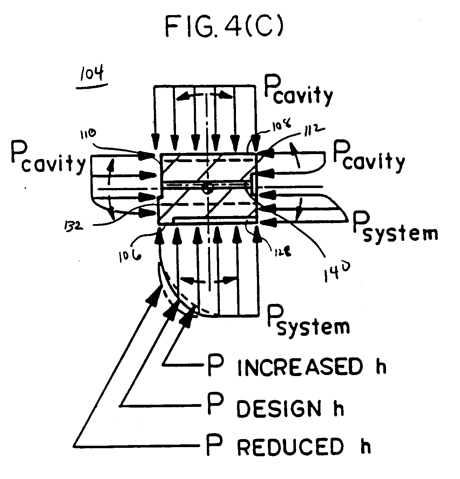

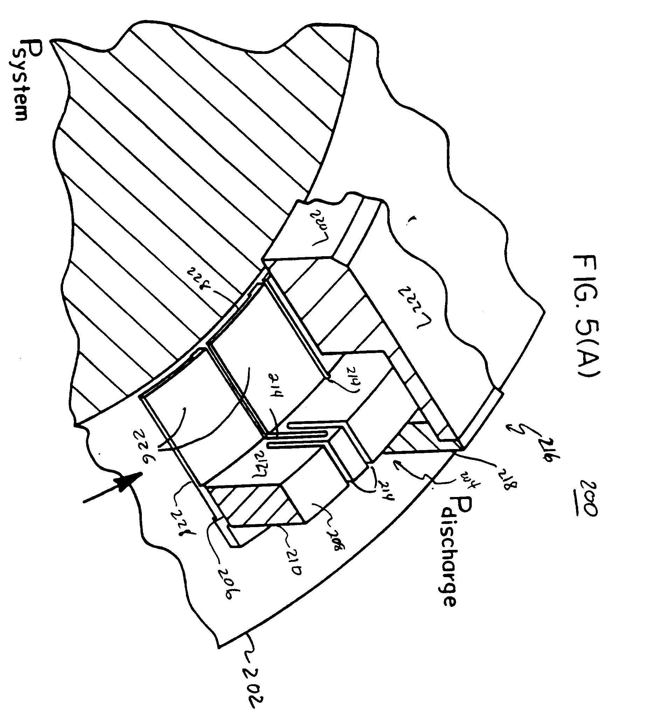

A second embodiment of the invention will now be described with reference to FIGS. 4(A)-4(C). As shown in FIG. 4(A), a compliant seal device 100 positionable within a housing cavity (not shown) surrounding a shaft 102 is provided for inhibiting the flow of a gas (or liquid) in a stream along the shaft 102. As in the first embodiment, it is contemplated that the housing cavity is formed in a machine housing (not shown) and that the gas (or liquid) is sealed, for example, within the machine housing. Again, while the sealed gas (or liquid) has a system pressure of P_{system}, the area outside of the machine housing toward which the sealed gas (or liquid) will tend to flow has a discharge pressure P_{discharge}, which is less than the system pressure P_{system}.

The compliant seal device 100 comprises an annular member 104 having an inner peripheral surface 106, an outer peripheral surface 108 radially spaced from the inner peripheral surface 106, a front surface 110 facing the discharge pressure P_{discharge}, and a back surface 112 axially spaced from the front surface 110 and facing the system pressure P_{system}. As in the first embodiment, the annular member 104 preferably comprises a material having a high yield strength at high temperatures such as, for example, Inconel®. Again, the composition of the annular member 104 can be varied depending on the particular application with which the compliant seal device 100 is to be used. As also in the first embodiment, the annular member 104 includes a plurality of slots 114 formed therethrough and arranged, for example, as shown FIG. 4(B), to provide the annular member 104 with circumferential flexibility.

Preferably, the compliant seal device 100 further comprises a hollow annular container 116 having a front wall 118, a back wall 120, and an outer peripheral wall 122. As in the first embodiment, it is contemplated that the container 116 is removeably positionable within the housing cavity and has an opening facing radially inward to form a cavity corresponding in shape to the housing cavity. Again, the container 116 preferably comprises the same material as the annular member 104 and the annular member 104 is preferably positioned within the container 116 such that the container 116 and the annular member 104 form a single piece package. Also, to inhibit the annular member 104 from rotating within the container 116 (or the machine housing), one or more anti-rotational pins (not shown) extending from the container 116 (or the machine housing) along an axial direction of the annular member 104 can be provided in engagement with the annular member 104.

The complaint seal device 100 further comprises means for maintaining at least a partial pressure balance across the inner and outer peripheral surfaces 106 and 108 of the annular member 104 and means for maintaining at least a partial pressure balance across the front and back surfaces 110 and 112 of the annular member 104.

As shown in FIG. 4(A), by way of example and not limitation, the means for maintaining a least a partial pressure balance across the inner and outer peripheral surfaces 106 and 108 of the annular member 104 is represented by a space 126 defined by the outer peripheral surface 108 of the annular member 104 and the outer peripheral wall 122 of the container 116 (or the housing cavity) and a recess 128 formed in the inner peripheral surface of the annular member. Like the first embodiment, the space 126 communicates with the system pressure P_{system} via, for example, a plurality of through ports 130. Further, the recess 128 preferably includes, for example, any one of an open Rayleigh pad, a closed Rayleigh pad, a tapered Rayleigh pad, a shrouded Rayleigh pad a radial groove, and a spiral groove also in communication with the system pressure P_{system}.

As also shown in FIG. 4(A), by way of example and not limitation, the means for maintaining at least a partial pressure balance across the front and back surfaces 110 and 112 of the annular member 104 is represented by a first dam member 132 positioned between the front surface 132 of the annular member 104 and the front wall 118 of the container 116 (or housing cavity) to define a space 134 between the front surface 132 of the annular member 104 and the front wall 118 of the container 116 (or the housing cavity) and a plurality of recesses 136 formed in the back surface 112 of the annular member 104. Although FIG. 4(A) shows the first dam member 106 formed together with the annular member 104 as a single piece element, the first dam member 106 can, alternatively, be formed together with front wall 118 of the container 116 (or the housing cavity) as a single piece element. The space 134 defined by the first dam member 132 communicates with the discharge pressure P_{discharge} via, for example, one or more through ports, such as through ports 138.

The recesses 136 are formed in the back surface 112 of the annular member 104 to define respective spaces between the back surface 112 of the annular member 104 and the back wall 120 of the container 116 (or the housing cavity). Preferably, the recesses 136 are arranged, for example, as shown in FIG. 4(B), so as not to communicate with the slots 114. It is contemplated that the recesses 136 can, alternatively, be formed in the back wall 120 of the container 116 (or the housing cavity) to defined the respective spaces between the back surface 112 of the annular member 104 and the back wall 120 of the container 116 (or the housing cavity). As shown in FIG. 4(A), each of the recesses 136 communicates with the discharge pressure P_{discharge} through the plurality of through ports 140 formed through the annular member 104. Preferably, the through ports 140 are aligned with corresponding ones of the through ports 138 such that the recesses 136 are vented to the discharge pressure P_{discharge}. In this regard, the diameters of the through: ports 140 are preferably larger than the diameters of the through ports 138 to ensure that the recesses 136 are properly vented to the discharge pressure P_{discharge} over a range of radial positions of the annular member 104.

FIG. 4 (C) shows a typical pressure distribution around the annular member 104 during non-rotating conditions of the shaft 102. It should be apparent from FIG. 4(C), that the vented recesses 136 in the annular member 104 tend to reduce the axial force along the back surface 112 of the annular member 104. It is contemplated that by proper sizing of the through ports 140 and 138 and the recesses 128 and 136, an virtually complete pressure balance across the front and back surfaces 110 and 112 across the inner and outer peripheral surfaces 106 and 108 of the annular member 104 can be achieved. It is further contemplated that by proper radial positioning of the geometry of the annular member 104 and radial location of the first dam member 132 and the recesses 136, at least a partial moment force balance about the area centroid of the annular member 104 can also be achieved.

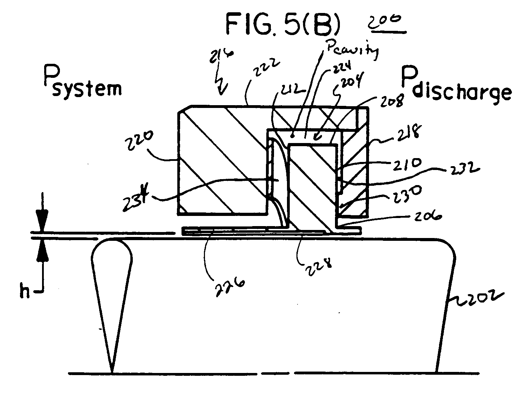

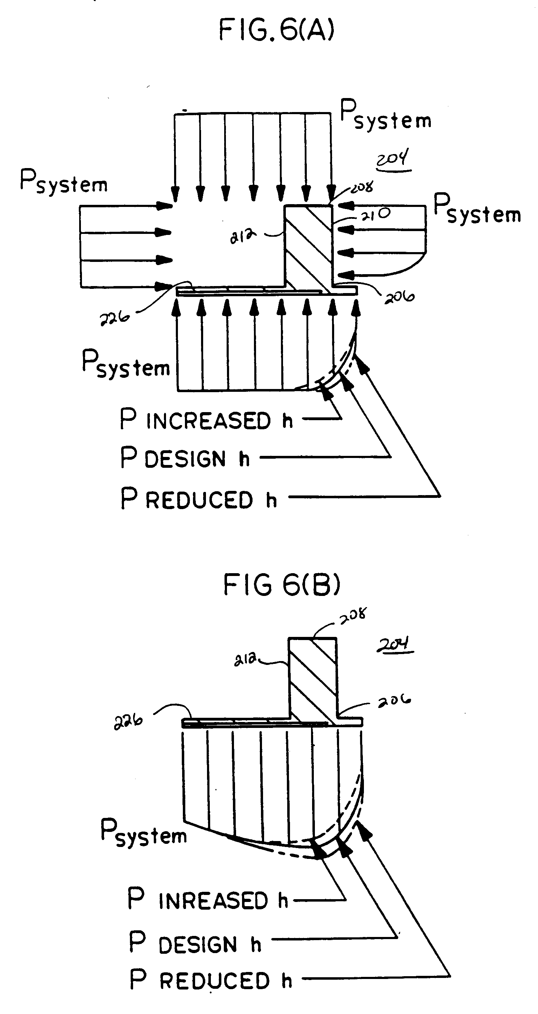

A third embodiment of the invention will now be described with reference to FIGS. 5(A)-5(B) and 6(A)-6(B). As shown in FIGS. 5(A)-5(B), a compliant seal device 200 positionable within a housing cavity (not shown) surrounding a shaft 202 is provided for inhibiting the flow of a gas (or liquid) in a stream along the shaft 202. As in the first and second embodiments, it is contemplated that the housing cavity is formed in a machine housing (not shown) and that the gas (or liquid) is sealed, for example, within the machine housing. Again, while the sealed gas (or liquid) has a system pressure of P_{system}, the area outside of the machine housing toward which the sealed gas (or liquid) will tend to flow has a discharge pressure P_{discharge}, which is less than the system pressure P_{system}.

The compliant seal device 200 comprises an annular member 204 having an inner peripheral surface 206, an outer peripheral surface 208 radially spaced from the inner peripheral surface 206, a front surface 210 facing the discharge pressure P_{discharge}, and a back surface 212 axially spaced from the front surface 210 and facing the system pressure P_{system}. As in the first and second embodiments, the annular member 204 preferably comprises a material having a high yield strength at high temperatures such as, for example, Inconel®. Once again, the composition of the annular member 204 can be varied depending on the particular application with which the compliant seal device 200 is to be used. As also in the first and second embodiments, the annular member 204 includes, for example, a plurality of slots 214 formed therethrough to provide the annular member 204 with circumferential flexibility.

Preferably, the compliant seal device 200 further comprises a hollow annular container 216 having a front wall 218, a back wall 220, and an outer peripheral wall 222. As in the first and second embodiments, it is contemplated that the container 216 is removeably positionable within the housing cavity and has an opening facing radially inward to form a cavity corresponding in shape to the housing cavity. Once again, the container 216 preferably comprises the same material as the annular member 204 and the annular member 204 is preferably positioned within the container 216 such that the container 216 band the annular member 204 form a single piece package.

The complaint seal device 200 further comprises means for maintaining at least a partial pressure balance across the inner and outer peripheral surfaces 206 and 208 of the annular member 204 and means for maintaining at least a partial pressure balance across the front and back surfaces 210 and 212 of the annular member 204.

As shown in FIGS. 5(A) and 5(B), by way of example and not limitation, the means for maintaining a least a partial pressure balance across the inner and outer peripheral surfaces 206 and 208 of the annular member 204 is represented by a space 224 defined by the outer peripheral surface 208 of the annular member 204 and the outer peripheral wall 222 of the container 216 (or the housing cavity) and a plurality of flexible sheet members 226 attached to the inner peripheral surface 206 of the annular member 204. The space 224 is in communication with the system pressure P_{system}, for example, along the back surface 212 of the annular member 204.

Preferably, the flexible sheet members 226 comprise the same material as the annular member 204 and are attached to the inner peripheral surface 206 of the annular member 204, for example, by welding or other means known in the art. Preferably, the flexible sheet members 226 are arranged such that they extend beyond at least one of the front and back surfaces 210 and 212 of the annular member 204, for example, as shown in FIG. 5(B). As shown in FIG. 5(A), the flexible sheets members 226 are annularly positioned around the shaft 202 and circumferentially spaced from each other and each of the flexible sheet members 226 preferably includes a recess 228 formed therein proximate the shaft 202 and in communication with the system pressure P_{system}. As in the first and second embodiments, the recesses 228 can include any one of an open Rayleigh pad, a closed Rayleigh pad, a tapered Rayleigh pad, a shrouded Rayleigh pad a radial groove, and a spiral groove. Again, alternative designs for the recesses 228 can also be utilized as is known in the art.

It is contemplated that the flexible sheet members 226 are able to flex up and down to accommodate small, high speed radial motion of the shaft 202 which could occur, for example, during high speed runout off the shaft 202. For larger radial motion of the shaft 202, such as, for example, centrifugal or differential thermal growth of the shaft 202, it is contemplated that the annular member 204 with the plurality of slots 214 will be able to expand or contract accordingly. For still larger radial motion of the shaft 202, such as radial excursions resulting from the shaft 202 operating at critical speeds as in the case of industrial machinery or from the shaft 202 being subjected to hard landings or maneuvers as in the case of gas turbine aircraft engines, it is contemplated that the annular member 202 with the flexible sheet members 226 can move radially within the container 216 (or the housing cavity) to sufficiently accommodate such movement of the shaft 202.

As also shown in FIGS. 5(A) and 5(B), by way of example and not limitation, the means for maintaining a least a partial axial pressure balance across the front and back surfaces 210 and 212 of the annular member 204 is represented by a first dam member 230 positioned between the front surface 210 of the annular member 204 and the front wall 218 of the container 216 (or the housing cavity) to define a space 232 between the front surface 210 of the annular member 202 and the front wall 218 of the container 216 (or the housing cavity) and a spring member 234 for lightly biasing the front surface 210 of the annular member 204 against the first dam member 230. The space 232 defined by the first dam member 230 communicates with the system pressure P_{system} along the back side 212 of the annular member 202 as shown in FIG. 5(B). The spring member 234 can be any number of spring devices, known in the art such as, for example, a wave spring or the like.

FIG. 6(A) shows a typical pressure distribution of the compliant seal device 200 during non-rotating conditions of the shaft 202. As shown in FIG. 6(A), the full system pressure P_{system} acts along the front surface 210 of the annular member 202 as the front surface 210 is traversed from the outer peripheral surface 208 of the annular member 202 to the first dam member 230. As the front surface 210 is traversed from the first dam member 230 to the shaft 202, this pressure decreases parabolically. Along the back surface 212 of the annular member 202, the full system pressure P_{system} exists as the back surface 212 is traversed from the outer peripheral surface 208 of the annular member 202 to the shaft 202. Thus, like the first embodiment, the third embodiment has only a partial pressure balance across the front and back surfaces 210 and 212 of the annular member 202.

Unlike the first embodiment, however, the third embodiment achieves virtually a complete radial pressure balance across the inner and outer peripheral surfaces 206 and 208 of the annular member 204. As shown in FIG. 6(A), there is a parabolic pressure distribution from the system pressure p_{system} to the discharge [pressure P_{discharge} under the flexible sheet members 226, while the full system pressure P_{system} acts along the outer peripheral surface of the annular member 204 and above the flexible sheet members 226. It is contemplated that the amount by which the full system pressure P_{system} acts on the top of the flexible sheet members 226 can be varied, for example, by varying the length of the flexible sheet members 226, to obtain an almost complete pressure balance across the inner and outer peripheral surfaces 206 and 208 of the annular member 202. Further, as in the first embodiment, high speed response radial force balancing can be obtained by virtue of the fact that the shape of the pressure distribution under the flexible sheet members 226 varies as a function of the operating clearance h. This is shown in FIG. 6(A) where the solid curve corresponds to the design clearance h, the lower dashed curve corresponds to a reduced clearance h, and the upper dashed curve corresponds to an increased operating clearance h. Still further, as with the other embodiments, thee stiffness of the film between the annular member 204 and the shaft 202 also increases when the shaft 202 rotates, by the hydrodynamic force component of the film. This effect is illustrated in PIG. 6(B) which shows pressure distributions along the flexible sheet members 226 corresponding to a design clearance h, and increased operating clearance h, and a decreased operating clearance h.

It will be apparent to those skilled in the art that various modifications and variations can be made in the compliant seal device of the present invention without departing from the spirit or scope of the invention. For example, it is within the purview of one having ordinary skill in the art to combine various features of each of the foregoing embodiments to arrive at alternative structures without undue experimentation. Thus, it is intended that the present invention cover the modifications and variations of the invention provided they come within the scope of the appended claims and their equivalents.

## Claims

1. A compliant seal device positionable within a housing cavity surrounding a shaft for sealing a high pressure area from a low pressure area along the shaft, the compliant seal device comprising:
an annular member having an inner peripheral surface, an outer peripheral surface radially spaced from the inner peripheral surface, a front surface facing the low pressure area, and a back surface axially spaced from the front surface and facing the high pressure area, the annular member being circumferentially flexible;
means for maintaining at left a partial pressure balance across the inner and outer peripheral surfaces of the annular member; and
means for maintaining at least a partial pressure balance across the front and back surfaces of the annular member.

2. The compliant seal device of claim 1, wherein the annular member includes a plurality of slots formed therethrough, the plurality of slots being arranged to provide the annular member with the circumferential flexibility.

3. The compliant seal device of claim 2, wherein the plurality of slots include first and second slots extending radially inward from the outer peripheral surface of the annular member and a third slot extending radially outward from the inner peripheral surface of the annular member, the third slot being positioned between the first and second slots to form first and second flexible beam sections.

4. The compliant seal device of claim 2, wherein the plurality of slots include first and second sets of slots extending radially inward from the outer peripheral surface of the annular member and a third set of slots extending radially outward from the inner peripheral surface of the annular member, each slot of the third set of slots being positioned between respective slots of the first and second sets of slots to form respective first and second flexible beam sections.

5. The compliant seal device of claim 1, wherein the means for maintaining at least a partial pressure balance across the front and back surfaces of the annular member includes:
a first dam member positioned between the front surface of the annular member and a front wall of the housing cavity to define a space between the front surface of the annular member and the front wall of the housing cavity; and
a second dam member positioned between the back surface of the annular member and a back wall off the housing cavity to define a space between the back surface of the annular member and the back wall of the housing cavity.

6. The compliant seal device of claim 5, wherein the first dam member, the second dam member, and the annular member are formed together as a single piece element.

7. The compliant seal device off claim 5, wherein the first dam member and the front wall of the housing cavity are formed together as a single piece element, and wherein the second dam member and the back wall of the homing cavity are formed together as a single piece element.

8. The compliant seal device of claim 1, wherein the means for maintaining at least a partial pressure balance across the front and back surfaces of the annular member includes:
a first dam member positioned between the front surface of the annular member and a front wall of the housing cavity to define a space between the front surface of the annular member and the front wall of the housing cavity; and
a plurality of recesses formed in the back surface of the annular member to define respective spaces between the back surface of the annular member and a back wall of the housing cavity.

9. The compliant seal device of claim 1, wherein the means for maintaining at least a partial pressure balance across the front and back surfaces of the annular member includes:
a first dam member positioned between the front surface of the annular member and a front wall of the housing cavity to define a space between the front surface of the annular member and the front wall of the housing cavity; and
a plurality of recesses formed in a back wall of the housing cavity to define respective spaces between the back surface of the annular member and the back wall of the housing cavity.

10. The compliant seal device of claim 8 or 9, wherein the annular member, the first dam member, and the plurality of recesses are arranged to provide at least a partial moment force balance about the annular member.

11. The compliant seal device of claim 1, wherein the means for maintaining at least a partial pressure balance across the front and back surfaces of the annular member includes:
a first dam member positioned between the front surface of the annular member and a front wall of the housing cavity to define a space between the front surface off the annular member and the front wall of the housing cavity; and
a spring member for biasing the front surface of the annular member against the first dam member.

12. The compliant seal device of claim 1, wherein the means for maintaining at least a partial pressure balance across the inner and outer peripheral surfaces of the annular member includes:
a space defined by the outer peripheral surface of the annular member and an outer peripheral wall of the housing cavity, the space being in communication with the low pressure area; and
a recess formed in the inner peripheral surface of the annular member, the recess being in communication with the high pressure area.

13. The compliant seal device of claim 1, wherein the means for maintaining at least a partial pressure balance across the inner and outer peripheral surfaces of the annular member includes:
a space defined by the outer peripheral surface of the annular member and an outer peripheral wall of the housing cavity, the space being in communication with the high pressure area; and
a recess formed in the inner peripheral surface of the annular member, the recess being in communication with the high pressure area.

14. The compliant seal device of claim 12 or 13, wherein the recess includes any one of an open Rayleigh pad, a closed Rayleigh pad, a tapered Rayleigh pad, a shrouded Rayleigh pad, a radial groove, and a spiral groove.

15. The compliant seal device of claim 12, further comprising a through port for providing the communication between the low pressure area and the space defined by the outer peripheral surface of the annular member and the outer peripheral wall of the housing cavity.

16. The compliant seal device of claim 13, further comprising a through port for providing the communication between the high pressure area and the space defined by the outer peripheral surface of the annular member and the outer peripheral wall of the housing cavity.

17. The compliant seal device of claim 1, wherein the means for maintaining at least a partial pressure balance across the inner and outer peripheral surfaces of the annular member includes:
a space defined by the outer peripheral surface of the annular member and an outer peripheral wall of the housing cavity, the space being in communication with the high pressure area; and
a plurality of flexible sheet members attached to the inner peripheral surface of the annular member.

18. The compliant seal device of claim 17, wherein each of the plurality of flexible sheet members extends beyond at least one of the front surface of the annular member and the back surface of the annular member.

19. The compliant seal device of claim 17, wherein each of the plurality of flexible sheet members includes a recess formed therein proximate the shaft and in communication with the high pressure area.

20. The compliant seal device of claim 19, wherein each of the recesses includes any one of an open Rayleigh pad, a closed Rayleigh pad, a tapered Rayleigh pad, a shrouded Rayleigh pad, a radial groove, and a spiral groove.

21. The compliant seal device of claim 1, further comprising a hollow annular container positionable within the housing cavity; the hollow annular container having an opening facing radially inward for containing the annular member therein.

22. The compliant seal device of claim 1, further comprising at least one anti-rotational pin in engagement with the annular member to inhibit rotational movement of the annular member within the housing cavity.

23. An apparatus having a high pressure are and a low pressure area, the apparatus comprising:
a shaft;
a housing surrounding the shaft to separate the high pressure area from the low pressure area, the housing having a cavity formed therein surrounding the shaft; and
a compliant seal device positionable within the housing cavity for sealing the high pressure area from the low pressure area along the shaft, the compliant seal device including
an annular member having an inner peripheral surface, an outer peripheral surface radially spaced from the inner peripheral surface, a front surface facing the low pressure area, and a back surface axially spaced from the front surface and facing the high pressure area, the annular member being circumferentially flexible,
means for maintaining at least a partial pressure balance across the inner and outer peripheral surfaces of the annular member, and
means for maintaining at least a partial pressure balance across the front and back surfaces of the annular member.
